# EUROPEAN PATENT SPECIFICATION

(11) **EP 1 950 736 B1**
(45) Date of publication and mention of the grant of the patent: **10.11.2010**
(21) Application number: 05791972.2
(22) Date of filing: 07.09.2005
(51) Int. Cl.: G10L 15/02, G10L 15/28, G10L 17/00

(54) **MICROCONTROLLER-IMPLEMENTED METHOD FOR RECOGNIZING A SOUND SIGNAL**
MIKROCONTROLLER-IMPLEMENTIERTES VERFAHREN ZUR ERKENNUNG EINES TONSIGNALS
PROCEDE DE RECONNAISSANCE DE SIGNAUX DE SON AU MOYEN D'UN MICROCONTROLEUR

(43) Date of publication of application: 30.07.2008
(73) Proprietor: Biloop Tecnologic, S.L., 07760 Ciutadella (ES)
(72) Inventor: BARRERA VAZQUEZ, Juan Pedro, E-07760 Ciutadella Menorca,Islas Baleares (ES); MECA CASTANY, Luis Gonzaga, E-07760 Ciutadella (ES); PONS FULLANA, Gabriel, E-07760 Ciutadella Menorca,Islas Baleares (ES)
(74) Representative: Toro Gordillo, Ignacio Maria
(86) International application number: PCT/ES2005/000484
(87) International publication number: WO 2007/028836

(56) References cited:
- US-A- 4 827 519
- US-A1- 2002 074 987
- US-A1- 2005 131 692
- US-A1- 2005 177 362
- US-B1- 6 321 194
- SANTHOSHKUMAR U ET AL: "Digit recognition using energy envelope and zerocrossing rate" 19891122; 19891122 - 19891124, 22 November 1989 (1989-11-22), pages 270-273, XP010087871

## Description

### OBJECT OF THE INVENTION

The present invention relates to a method for recognizing a waveform by means of using a low computational power microcontroller.

It has a very broad scope of application provided that the signal is limited in time and is periodical, for example to differentiate between different types of a baby's crying, the routine of a machine, etc.

### BACKGROUND OF THE INVENTION

There are currently methods for recognizing waveforms based on the use of an electronic device known as a digital signal processor (or DSP).

This type of electronic devices is characterized by providing a high computational power, but it has the drawback of having a relatively high cost.

The computational power that they have is required for carrying out the traditional signal analysis method by means of Fast Fourier Transform (FFT). This method, FFT, converts the signal from the time field to the frequency field, which facilitates the analysis and processing of the signals in the scope of frequencies.

Time-domain voice analysis methods are also known in the priort art, as can be seen e.g. in US2005/0131692.

There are a number of applications in the sound signal processing field, both in the scope of music and in the field of scope of speech recognition, all of them based on the use of one type of a digital signal processor (DSP) or another.

Despite the great cost associated to this type of electronic devices, their use is prevented in those apparatuses of the consumer electronics field, where the cost is one of the main factors for judging the viability of a specific apparatus.

### DESCRIPTION OF THE INVENTION

To solve this drawback, a waveform recognition method according to the invention as defined in claim 1 can be implemented in a low-cost microcontroller. This allows the use thereof in all consumer electronics apparatuses for which they had previously been discarded.

This method requires that the signal to be analyzed is limited in time and repetitive. There are a number of examples of this type of signals, for example a child's cry, a dog's bark, the noise of a machine, and generally all those repetitive sounds made by people, animals or things.

The uniqueness of the method is based on not using an analysis of the signal in the frequency field, but in the time field. This change alone eliminates the need to use the Fast Fourier Transform and therefore the use of digital signal processors.

The method of the present invention eliminates the use of patterns stored in a memory with which the signal to be analyzed is compared. Instead, an identification process is carried out by means of a fuzzy logic algorithm.

The use of said algorithm allows absorbing certain amplitude variations in the input signal which would otherwise be discarded as not matching the pattern. Nevertheless, the signal to be analyzed must have a very small dynamic margin, therefore automatic control of the amplitude of the signal being analyzed is essential.

The signal analysis method of this invention is based on the use of a low-cost microcontroller incorporating an analog/digital converter.

The sampling phase starts when the beginning of the periodic signal is detected.

This converter allows taking a series of samples at regular intervals of the value of the amplitude of the signal envelope.

Direct samples of the signal are not taken, but the waveform of its envelope is previously obtained.

This difference is the key to being able to use a device without great demands as regards the computational power, given that it transforms the signal to be analyzed into another similar but much simpler signal from the analysis point of view.

The fact that the signal is repetitive allows taking samples from the envelope only during a repetition period of the signal.

The first consequence is the reduction of the speed of the signal. This involves the possibility of using a low-computational power microcontroller.

Secondly, automatic filtering of the high frequencies associated to the ambient noise occurs, therefore the method has great ambient noise resistance if it is compared to traditional methods.

Third, the information about the instantaneous frequency of the signal is eliminated. This makes the method independent of frequency.

The low frequency of the signal to be analyzed allows taking a much greater number of samples than the lower limit of the Nyquist frequency.

A number of samples that is twice the Nyquist frequency shall be taken in order to be able to apply redundancy comparison methods.

This over-sampling of the signal to be analyzed allows carrying out the analysis repeatedly with the two sample sequences.

This repetition of the analysis allows comparing the results obtained according to the analyzed sample sequence and applying different validation algorithms ensuring the reliability of the end result.

The redundancy of results obtained in consecutive sample series in turn allows being able to disregard those which have been affective by an impulse-type noise.

For the case in which this method is used in portable apparatuses, it is necessary to take into consideration the effect on samples caused by the wear of the batteries.

The waveform to be analyzed is characterized based on the use of a matrix of time parameters of the wave form.

The microprocessor carries out a series of calculations based on the samples taken, verified and with the errors corrected to obtain the following parameters:
1.- Mean value.
2.- Root mean square value.
3.- Work cycle.
4.- First-order derivative.
5.- Second-order derivative.
6.- Maximum value.
7.- Minimum value.

To determine if a signal belongs to a set of reference signals a comparison is done between the elements obtained from the signal and the elements of the different reference matrixes.

To assign the belonging of a certain matrix to a reference group, the latter must show a correlation between all the elements of the matrix exceeding a certain index.

The value of said index is calculated in relation to the other reference matrixes.

The fact that the index does not have a pre-established value allows accepting waveforms with very different values of appearance similarity but which have a high degree of similarity to one another in several elements of the matrix.

For example, the mean value could be very different from the reference value, but if the values of the remaining elements have a high degree of correlation the identification is positive.

This method allows automatically correcting the reduction of mean values of the signal as a result of the wear of batteries in portable apparatuses.

It must be pointed out that only a very small number of values are used for each signal to be analyzed (in this case seven), or in other words very few records of the RAM of the microprocessor.

As regards the samples, the maximum number allowed by the internal RAM memory of the microcontroller (in this case 64), therefore the requirements in relation to memory capacity are very small.

In relation to the required computational power, it must be pointed out that it is only necessary to perform basic computation operations (in this case addition and subtraction of 8-bit records, and no multiplication or division needs to be performed), incorporated in the simplest microcontrollers.

Therefore the requirements in relation to computational power of the microprocessor are very small.

As a result of the little computational power and the small amount of RAM memory, the smallest and therefore least expensive microcontrollers on the market can be used.

It must be pointed out that the entire process has a duration of less than several tenths of a second.

Therefore, from the user's point of view the analysis occurs instantaneously.

### DESCRIPTION OF THE DRAWINGS

To complement the description being made and for the purpose of aiding to better understand the features of the invention, a set of drawings is attached to the present specification as an integral part thereof in which the following is shown with an illustrative and non-limiting character:

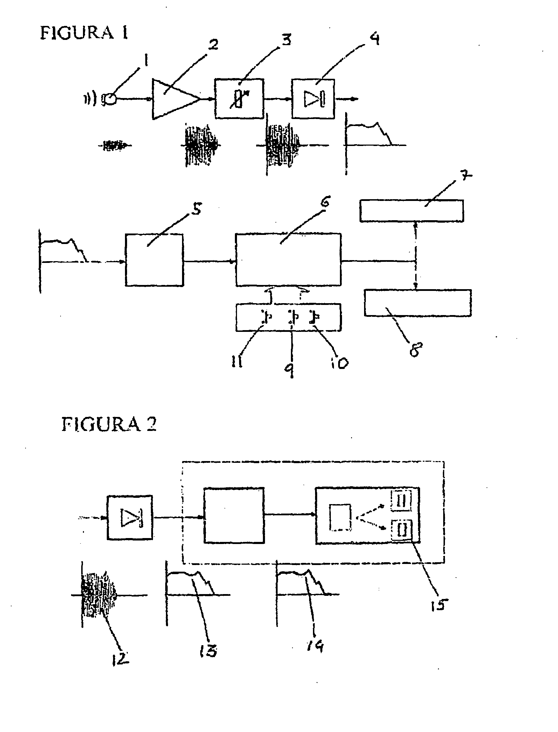

Figure 1 shows the different steps that are followed for processing the signal.
Figure 2 shows obtaining the envelope and the digitalization thereof.

### PREFERRED EMBODIMENT OF THE INVENTION

The method described in this patent has been implemented in a microcontroller which carries out the analysis of the sound of a baby's cry.

The apparatus in which the microcontroller has been incorporated is designed to be used in a portable manner by the person caring for the baby.

The distance at which the apparatus should be located from the baby's mouth is between 20 cm and 1 m.

The distance limit values will depend on the regulation capacity of the block carrying out the automatic level control.

The capturing of the sound is carried out by means of a microphone (1) coupled to a pre-amplifier (2) which increases the level of the captured signal. The signal (12) required is thus provided so that the automatic level control block (3) can feed the optimal signal to the envelope detector (4).

Once the signal envelope (13) is obtained, an analog/digital converter (5) obtaining the samples of the instantaneous value (14) of the signal is applied.

Then the values obtained with those values stored in the reference matrixes (15) are compared in the microprocessor (6).

Once the belonging of a signal to a certain reference group is identified, said information is shown in a liquid crystal display (7).

In the event that the belonging to any group has not been identified, an error message in the identification is shown.

As a complementary function, it has a memory (8) in which the advice that is appropriate for each of the identification situations is recorded.

The signal identification process can be re-started any time by means of a user control button (9).

It is possible to advance forward (10) or go back (11) between the different advice that is shown in the display by using two other buttons.

## Claims

1. *A microcontroller-implemented method for recognizing a sound signal, the method comprising: obtaining a time-domain envelope of the signal; taking samples from the envelope during a repetition period of the signal; obtaining several time domain parameters based on the samples taken; comparing those parameters with different reference matrices to identify their belonging to one of said matrices.*

2. *A microcontroller-inplemented method for recognizing a sound signal* according to claim 1, **characterized in that** the parameters of the signal which are compared comprise the mean value, the root-mean-square value, the work cycle, the first derivative, the second derivative, the maximum value and the minimum value of the signal itself.

3. **A microcontroller-implemented method** ***for recognizing** a sound signal* according to claim 1, **characterized by** using an automatic volume regulator to offset the change of the values of the signal caused by the wear of the batteries in portable apparatuses.

4. *A microcontroller-inplemented method for recognizing a sound signal* according to claim 1, **characterized in that** it uses a method for the relative comparison weighting of the measurement parameters based on fuzzy logic principles to increase the hit index.

5. *A microcontroller-inplemented method for recognizing a sound signal* according to claim 1, **characterized in that** it uses the time analysis of a signal by means of a microcontroller with very low memory capacity.

6. *A microcontroller-implemented method for recognizing a sound signal* according to claim 1, **characterized in that** it uses an automatic level control of the input signal so that the result of the analysis is virtually independent of the sound capture distance.

## Patentansprüche

1. In einem Mikrocontroller implementiertes Verfahren zum Erkennen eines Tonsignals, umfassend: Erhalten einer Hüllkurve des Signals im Zeitbereich; Entnehmen von Proben der Hüllkurve während eines Wiederholungszeitraums des Signals; Erhalten von mehreren auf den entnommenen Proben basierenden Parametern im Zeitbereich; Vergleichen jener Parameter mit verschiedenen Bezugsmatrizen zum Identifizieren ihrer Zugehörigkeit zu einer der genannten Matrizen.

2. In einem Mikrocontroller implementiertes Verfahren zum Erkennen eines Tonsignals nach Anspruch 1, **dadurch gekennzeichnet, dass** die Parameter des Signals, welche verglichen werden, den Mittelwert, den quadratischen Mittelwert, den Arbeitszyklus, die erste Ableitung, die zweite Ableitung, den Höchstwert und den Mindestwert des Signals an sich umfassen.

3. In einem Mikrocontroller implementiertes Verfahren zum Erkennen eines Tonsignals nach Anspruch 1, **gekennzeichnet durch** Verwenden eines automatischen Lautstärkereglers zum Versetzen der Änderung der Werte des Signals, welche **durch** den Verschleiß der Batterien in tragbaren Geräten hervorgerufen wird.

4. In einem Mikrocontroller implementiertes Verfahren zum Erkennen eines Tonsignals nach Anspruch 1, **dadurch gekennzeichnet, dass** es ein Verfahren zur relativen Vergleichsgewichtung der Messparameter verwendet, welches auf Fuzzylogik-Prinzipien basiert, um den Trefferindex zu erhöhen.

5. In einem Mikrocontroller implementiertes Verfahren zum Erkennen eines Tonsignals nach Anspruch 1, **dadurch gekennzeichnet, dass** es die Zeitanalyse eines Signals mittels eines Mikrocontrollers mit sehr geringer Speicherkapazität verwendet.

6. In einem Mikrocontroller implementiertes Verfahren zum Erkennen eines Tonsignals nach Anspruch 1, **dadurch gekennzeichnet, dass** es eine automatische Pegelkontrolle des Eingangssignals verwendet, so dass das Ergebnis der Analyse beinahe unabhängig von der Tonerfassungsabstand ist.

## Revendications

1. Méthode implémentée par microcontrôleur pour la reconnaissance d'un signal sonore, la méthode comprenant : obtenir une enveloppe dans le domaine temporel du signal ; prendre des échantillons à partir de l'enveloppe pendant une période de répétition du signal ; obtenir divers paramètres dans le domaine temporel basés sur les échantillons pris ; comparer les paramètres avec différentes matrices de référence pour identifier leur appartenance à l'une desdites matrices.

2. Méthode implémentée par microcontrôleur pour la reconnaissance d'un signal sonore selon la revendication 1, **caractérisée en ce que** les paramètres du signal qui sont comparés comprennent la valeur moyenne, la valeur de la moyenne quadratique, le cycle de travail, la première dérivée, la deuxième dérivée, la valeur maximale et la valeur minimale du signal lui-même.

3. Méthode implémentée par microcontrôleur pour la reconnaissance d'un signal sonore selon la revendication 1, **caractérisée par** l'utilisation d'un régulateur automatique de volume pour compenser le changement des valeurs du signal due à l'usure des batteries sur des appareils portables.

4. Méthode implémentée par microcontrôleur pour la reconnaissance d'un signal sonore selon la revendication 1, **caractérisée en ce qu'**il utilise une méthode pour la pondération de comparaison relative des paramètres de mesure basée sur des principes de logique floue pour augmenter l'index de occurrences.

5. Méthode implémentée par microcontrôleur pour la reconnaissance d'un signal sonore selon la revendication 1, **caractérisée en ce qu'**elle utilise l'analyse temporelle d'un signal au moyen d'un microcontrôleur avec une très petite capacité de mémoire.

6. Méthode implémentée par microcontrôleur pour la reconnaissance d'un signal sonore selon la revendication 1, **caractérisée en ce qu'**elle utilise un contrôle automatique de niveau du signal d'entrée de manière à ce que le résultat de l'analyse soit virtuellement indépendant de la distance de capture du son.
